# EUROPÄISCHE PATENTSCHRIFT

(11) **EP 2 542 369 B1**
(45) Veröffentlichungstag und Bekanntmachung des Hinweises auf die Patenterteilung: **03.05.2017**
(21) Anmeldenummer: 11718904.3
(22) Anmeldetag: 03.03.2011
(51) Int. Cl.: B23B 51/06

(54) **FÜHRUNGSLEISTE**
GUIDING PAD
PATIN DE GUIDAGE

(30) Priorität: 05.03.2010 DE 202010003288 U
(43) Veröffentlichungstag der Anmeldung: 09.01.2013
(73) Patentinhaber: Botek Präzisionsbohrtechnik GmbH, 72585 Riederich (DE)
(72) Erfinder: WENZELBURGER, Karl-Heinz, 72585 Riederich (DE); WENZELBURGER, Jürgen, 72555 Metzingen (DE)
(74) Vertreter: Jakelski & Althoff Patentanwälte PartG mbB
(86) Internationale Anmeldenummer: PCT/DE2011/000218
(87) Internationale Veröffentlichungsnummer: WO 2011/107081

(56) Entgegenhaltungen:
- CH-A5- 652 631
- DE-U1-202009 003 645
- JP-A- 2004 066 391
- JP-U- H01 106 115
- US-A1- 2005 025 928
- US-A1- 2010 054 879

## Beschreibung

### Stand der Technik

Die Erfindung betrifft eine Führungsleiste nach der Gattung des unabhängigen Anspruchs 1.

Führungsleisten werden in einem Sitz an einem Bohrkopf eines Tiefbohrwerkzeuges befestigt. Die Befestigung kann dabei lösbar oder wechselbar (z.B. durch Schrauben) oder auch stoffschlüssig (z.B. durch Löten oder Kleben) erfolgen. Eine Führungsleiste besitzt wenigstens eine Gleitfläche, welche dafür vorgesehen ist, mit der Bohrungswand zusammenzuwirken. Die gebräuchlichsten Systeme beim Tiefbohren sind das Einlippen-Bohrsystem, das so genannte BTA-System (BTA = Boring and Trepanning Association), auch STS-System (STS = Single Tube System) genannt, und das Ejektor-System. Eine Übersicht gibt die VDI-Richtlinie VDI3210.

Bei diesen Tiefbohrsystemen wird üblicherweise ein Kühlschmierstoff eingesetzt, um einerseits Schneiden und Führungsleisten zu schmieren und zu kühlen und um andererseits die bei der Zerspanung entstehenden Späne aus der Bohrung zu spülen. Tiefbohrwerkzeuge werden hauptsächlich zur Herstellung von Bohrungen mit großer Bohrtiefe im Verhältnis zum Bohrdurchmesser eingesetzt. Übliche Werte für die Bohrtiefe liegen im Bereich des 10-fachen bis 100-fachen des Bohrdurchmessers, können jedoch auch darüber oder darunter liegen.

Bei Tiefbohrwerkzeugen dienen Führungsleisten dazu, die entstehenden Schnittkräfte gegen die Bohrungswand abzustützen und das Tiefbohrwerkzeug in der Bohrung zu führen. Damit können Bohrungen hergestellt werden, die sich durch eine besonders gute Geradheit auszeichnen. Zusätzlich wird die Bohrungsoberfläche durch die darauf gleitenden Führungsleisten geglättet.

Führungsleisten werden üblicherweise aus Hartmetall hergestellt. Sie können auch aus anderen verschleißbeständigen Materialien wie Keramik oder CBN oder anderen dafür geeigneten Materialien hergestellt werden.

Es sind auch Führungsleisten bekannt, die aus einem Stahlkörper bestehen, in dem Elemente aus verschleißbeständigem Material befestigt sind, die dann ihrerseits mit der Bohrungswand in Kontakt treten. Darüber hinaus existieren Führungsleisten, deren Gleitfläche in mehrere Bereiche unterteilt ist, zwischen denen Vertiefungen angeordnet sein können.

Führungsleisten gleiten beim Bohrvorgang über die Bohrungswand. Dabei liegt gewöhnlich nur ein Teil ihrer Gleitfläche an der Bohrungswand an. Bei unzureichender Kühlung und/oder Schmierung durch den Kühlschmierstoff kann in dieser Kontaktzone die Reibung zwischen Führungsleiste und Bohrungswand sehr hoch sein, wodurch sehr hohe Temperaturen auftreten können.

Ein allgemein bekanntes Problem, das durch die hohen Temperaturen verursacht wird, ist eine Rissbildung in den Führungsleisten. Diese tritt vorwiegend bei Führungsleisten aus Hartmetall auf. Die bei hohen Temperaturen entstehenden Risse können sich bei fortschreitender Belastung immer weiter ausdehnen. Dadurch kann es zu Ausbrüchen oder einem Bruch der Führungsleiste kommen, wodurch die Bohrungsoberfläche beschädigt werden kann. Diese Beschädigung kann dazu führen, dass das Werkstück nachgearbeitet werden muss oder nicht mehr verwendbar ist. Eine an den Führungsleisten auftretende Rissbildung ist deshalb unerwünscht und sollte weitestgehend vermieden werden.

In der DE 600 14 923 T2 ist eine Führungsleiste offenbart, die im Bereich der Gleitflächen eine flächige Absenkung oder Vertiefung aufweist, deren Ausdehnung einen Winkel von 55° + 10° mit der Längsrichtung der Führungsleiste einschließt. Diese Absenkung ist vergleichsweise breit und tief im Verhältnis zu den Abmessungen der Führungsleiste ausgeführt und soll ermöglichen, dass der Kühlschmierstoff durch diese Absenkung fließen kann. Dadurch soll eine besonders gute Kühlung der Gleitfläche bzw. Kontaktfläche erreicht werden, wodurch die Rissbildung reduziert werden soll.

Die Absenkung in dieser bekannten Führungsleiste ist vergleichsweise breit ausgebildet, die Gleitflächen sind am Rande angeordnet. Diese Ausbildung ermöglicht zwar einen optimalen Kühlmitteldurchtritt, gleichwohl wird eine ausreichende Schmierung im Bereich der Kontaktflächen nicht in vollem Umfange gewährleistet. Der Kühlschmierstoff wird in diesem Falle nämlich nur entlang den seitlichen Begrenzungsflächen zugeführt. An die Kontaktflächen selbst kann Kühlschmierstoff jedoch nur schwer gelangen.

Aus der DE 20 2009 003 645 U1 geht eine Führungsleiste für Tiefbohrwerkzeuge mit wenigstens einer Gleitfläche hervor, wobei zumindest im Bereich einer Kontaktzone der Gleitfläche wenigstens eine Schmiernut angeordnet ist. Die Schmiernut ist hier als Längsnut ausgebildet und mündet jeweils in den Begrenzungsflächen, welche die Führungsleiste in ihrer Länge beschränkt, also in den beiden Stirnflächen der Führungsleiste.

Der Erfindung liegt die Aufgabe zugrunde, eine Führungsleiste zu vermitteln, durch die eine wesentlich verbesserte Schmierung im Bereich der Kontaktflächen und insbesondere im Bereich der Kontaktzonen, die mit der Bohrungswand in Kontakt stehen, erreicht wird, sodass die Gefahr einer Rissbildung verringert und hierdurch die Lebensdauer der Führungsleiste verlängert wird.

### Offenbarung der Erfindung

Diese Aufgabe wird durch die im unabhängigen Anspruch 1 angegebenen Merkmale gelöst.

Vorteilhafte Ausgestaltungen und Ausführungsformen sind Gegenstand der auf Anspruch 1 rückbezogenen Unteransprüche. So ist gemäß einer vorteilhaften Ausführungsform vorgesehen, dass die Länge und Breite der Schmiernuten im Wesentlichen übereinstimmen, sodass die taschenförmigen Schmiernuten eine quadratische Grundfläche aufweisen. Darüber hinaus können auch kreisförmige oder ovale Grundflächen vorgesehen sein. Eine derartige Ausbildung der Schmiernuten ist insbesondere unter Herstellungsgesichtspunkten vorteilhaft.

Im Hinblick einer optimalen Schmierung sind Schmiernuten vorteilhaft, deren Breite verglichen mit der Breite der Führungsleiste klein ist. Als vorteilhaft haben sich hierbei Schmiernuten erwiesen, deren Breite maximal einem Fünftel der Breite der Führungsleiste entspricht.

Die Querschnittsform der Schmiernuten selbst kann rein prinzipiell die unterschiedlichste Gestalt aufweisen. Neben einer polygonalen kann auch eine bogenförmige oder eine beliebige unregelmäßige Gestalt vorgesehen sein. Auch Kombinationen dieser Formen sind möglich.

Die Schmiernuten selbst weisen nur eine geringe Tiefe auf. Als vorteilhaft hat sich eine Tiefe der Schmiernuten erwiesen, die zwischen 0,1 mm und 1,5 mm beträgt.

Zur Erhöhung der Standzeit der Führungsleisten ist vorgesehen, dass sie wenigstens teilweise aus Hartmetall bestehen. Darüber hinaus kann auch vorgesehen sein, dass die Führungsleisten mit einer Hartstoffschicht beschichtet sind.

### Zeichnungen

Ausführungsbeispiele der Erfindung sind in der Zeichnung dargestellt und in der nachfolgenden Beschreibung näher erläutert.

Es zeigen:
- Fig. 1a: einen Bohrkopf des BTA-Bohrsystems mit drei auswechselbar befestigten Führungsleisten;
- Fig. 1b: einen Bohrkopf des Ejektor-Bohrsystems mit zwei stoffschlüssig befestigten Führungsleisten;
- Fig. 2: einen Bohrkopf eines Einlippenbohrers mit zwei auswechselbar befestigten Führungsleisten;
- Fig. 3a: eine Führungsleiste nach dem Stand der Technik;
- Fig. 3b: eine weitere Führungsleiste nach dem Stand der Technik in mehrteiliger Ausführung und mit einer Absenkung zwischen den Gleitflächen;
- Fig. 4: die typische Kontaktzone einer Führungsleiste nach dem Stand der Technik;
- Fig. 5: ein Ausführungsbeispiel einer erfindungsgemäßen Führungsleiste mit mehreren taschenartig geschlossenen Schmiernuten;
- Fig. 6: eine Draufsicht der in Fig. 9 gezeigten Führungsleiste;
- Fig. 7: einen Querschnitt einer Ausführungsform einer Schmiernut einer erfindungsgemäßen Führungsleiste;
- Fig. 8: einen Querschnitt einer weiteren Ausführungsform einer Schmiernut einer erfindungsgemäßen Führungsleiste;
- Fig. 9: einen Querschnitt einer weiteren Ausführungsform einer Schmiernut einer erfindungsgemäßen Führungsleiste.

### Beschreibung von Ausführungsbeispielen

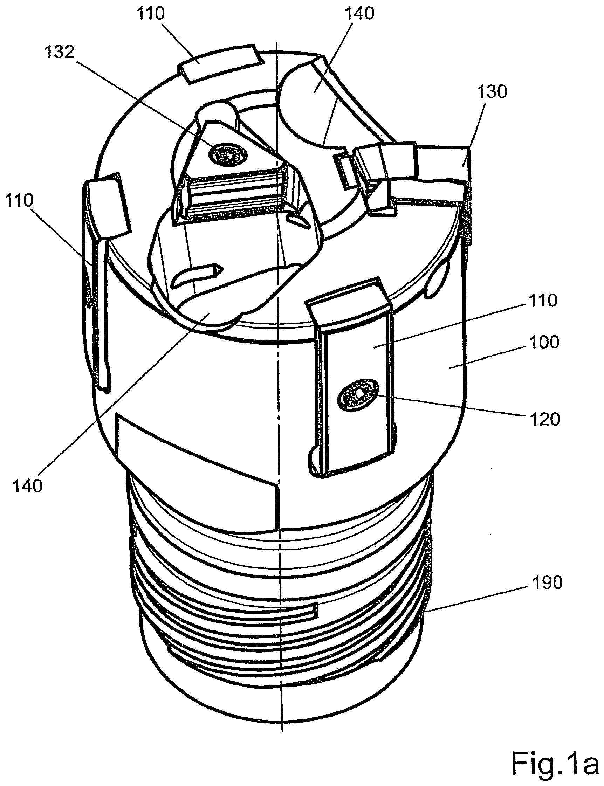

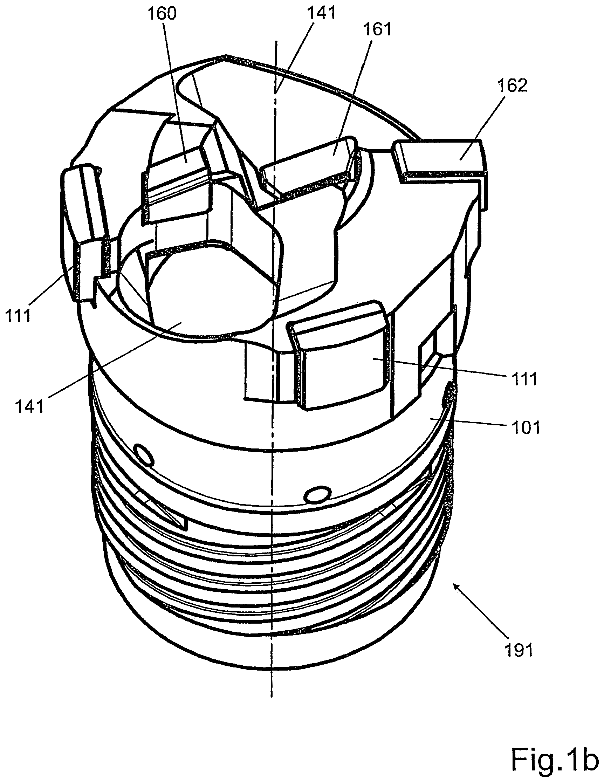

Figur 1 a zeigt eine isometrische Ansicht eines Bohrkopfes 100 für das so genannte BTA-Bohrsystem, der mit drei auswechselbar befestigten erfindungsgemäßen Führungsleisten 110 ausgestattet ist. Die Führungsleisten 110 sind mit Schrauben 120 am Bohrkopf 100 befestigt, so dass sie nach Erreichen ihrer Lebensdauer gewendet oder gegen neue Führungsleisten 110 ausgetauscht werden können. Die Lebensdauer des Bohrkopfes 100 kann ein Mehrfaches der Lebensdauer der Führungsleisten 110 betragen.

Weiterhin sind am Bohrkopf 100 zwei mit Schrauben auswechselbar befestigte Schneidplatten 130, 132 angeordnet. Der Bohrkopf 100 weist zwei Öffnungen 140 auf, die mit einem inneren Kanal verbunden sind. Über diese Öffnungen 140 und den inneren Kanal werden die beim Bohren entstehenden Späne abgeführt. An einem Ende ist der Bohrkopf 100 mit einer Aufnahme 190 versehen, mittels derer er mit einer (nicht dargestellten) Bohrstange auf an sich bekannte Weise verbunden wird. Sowohl die Anzahl und Anordnung der Schneidplatten 130, 132 als auch der Öffnungen 140 und Kanäle und die Ausgestaltung der Aufnahme 190 für die Bohrstange sind für die vorliegende Erfindung unerheblich.

Figur 1b zeigt eine isometrische Ansicht eines Bohrkopfes 101 für das Ejektor-Bohrsystem, der mit zwei stoffschlüssig befestigten Führungsleisten 111 ausgestattet ist. Ferner sind drei stoffschlüssig befestigte Schneidplatten 160, 161, 162 am Bohrkopf 101 angeordnet. Die Lebensdauer eines solchen Bohrkopfes 101 ist üblicherweise erreicht, wenn entweder die Führungsleisten 111 oder die Schneidplatten 160, 161, 162 das Ende ihrer Lebensdauer erreicht haben. Der Bohrkopf 101 weist zwei Öffnungen 141 auf, die mit einem inneren Kanal verbunden sind. Über diese Öffnungen 141 und den inneren Kanal werden die beim Bohren entstehenden Späne abgeführt. An einem Ende ist der Bohrkopf 101 mit einer Aufnahme 191 versehen, mittels derer er mit einer (nicht dargestellten) Bohrstange verbunden wird. Sowohl die Anzahl und Anordnung der Schneidplatten 160, 161, 162 sowie der Öffnungen und Kanäle als auch die Ausgestaltung der Aufnahme 191 für die Bohrstange sind für die vorliegende Erfindung unerheblich.

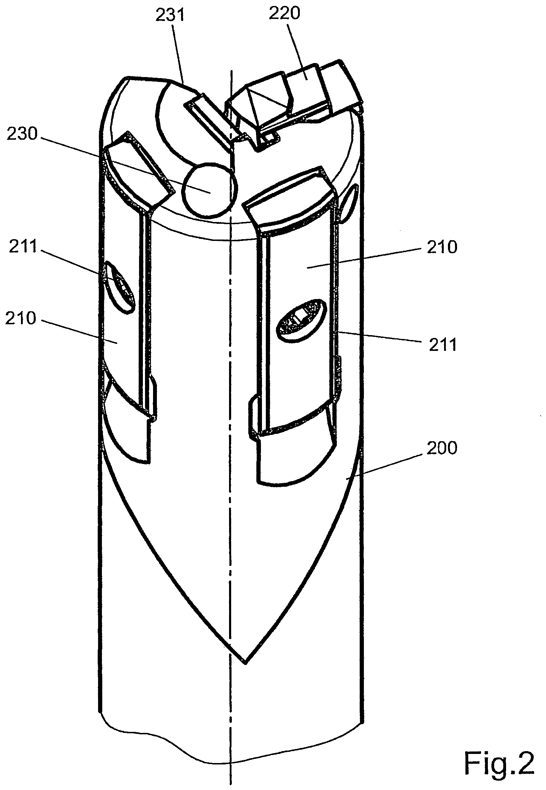

Figur 2 zeigt eine isometrische Ansicht eines Bohrkopfs 200 eines Einlippenbohrers, der mit zwei auswechselbar befestigten Führungsleisten 210 ausgestattet ist. Die Führungsleisten 210 sind mit Schrauben 211 befestigt.

Darüber hinaus ist der Bohrkopf 200 mit einer mittels einer Schraube auswechselbar befestigten Schneidplatte 220 ausgestattet. Er weist zudem einen innen liegenden Kanal 230 zur Zufuhr von Kühlschmierstoff und eine außen liegende Nut 231 zur Abfuhr der beim Bohren entstehenden Späne und des Kühlschmierstoffs auf. Die Anzahl und Anordnung der Schneidplatten 210 sowie die Anordnung des Kanals/der Kanäle sind für die vorliegende Erfindung unerheblich.

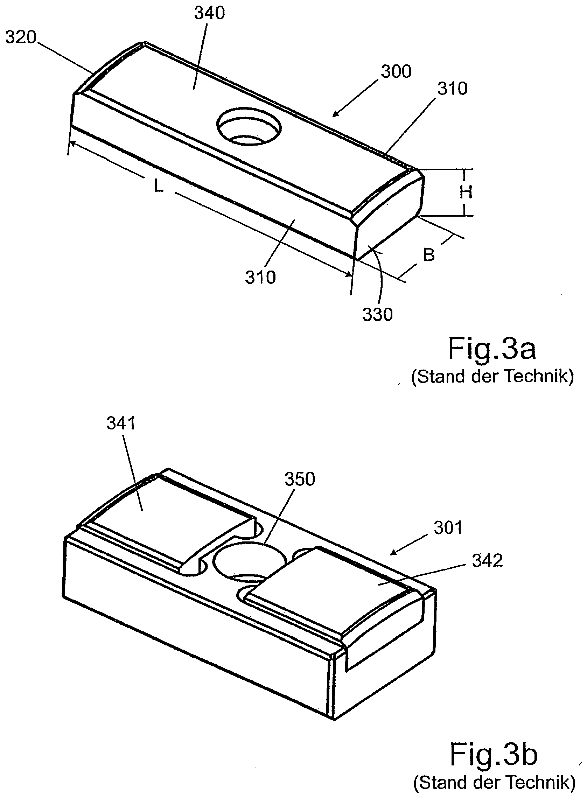

Figur 3a zeigt eine isometrische Ansicht einer Führungsleiste 300 nach dem Stand der Technik. Die Führungsleiste 300 hat üblicherweise zwei ebene Seitenflächen 320, die die Längenausdehnung L begrenzen, zwei ebene Seitenflächen 310, die die Breite B begrenzen und eine ebene Bodenfläche 330 sowie eine gekrümmte Gleitfläche 340, die die Dicke H der Führungsleiste 300 begrenzen. Mit der Bodenfläche 330 und den Seitenflächen 310, 320 liegt die Führungsleiste 300 an einem entsprechenden Sitz im Bohrkopf an, wodurch die Lage der Führungsleiste 300 im Bohrkopf definiert ist. Die Krümmung der Gleitfläche 340 ist vorteilhafterweise so ausgeführt, dass ihr Krümmungsradius kleiner oder annähernd gleich dem Radius der zu erzeugenden Bohrung ist. Die Krümmungsachse der Gleitfläche ist vorzugsweise annähernd parallel zur Rotationsachse des Bohrkopfes ausgerichtet, die im Wesentlichen parallel zu den Längsseiten 310 und der Bodenfläche 330 verläuft.

Figur 3b zeigt eine isometrische Ansicht einer weiteren typischen Führungsleiste gemäß dem Stand der Technik. Diese Führungsleiste 301 entspricht derjenigen der Figur 3a, mit dem Unterschied dass die Führungsleiste 301 aus mehreren Teilen aufgebaut ist, die miteinander verbunden sind. Vorzugsweise werden solche Führungsleisten aus einem ersten Teil aus einem ersten kostengünstigen Werkstoff, beispielsweise Stahl, und mindestens einem weiteren Teil aus verschleißbeständigem Material, beispielsweise Hartmetall aufgebaut, die mittels einem stoffschlüssigen Verbindungsverfahren, beispielsweise durch Löten, miteinander verbunden sind. Die in der Figur dargestellte Führungsleiste weist zwei Gleitflächen 341, 342 auf, zwischen denen eine Vertiefung 350 angeordnet ist. Die Gleitflächen 341, 342 werden dabei durch das verschleißbeständige Material gebildet. Für die Krümmung der Gleitflächen 341, 342 gilt das oben in Verbindung mit Fig. 3a Gesagte entsprechend.

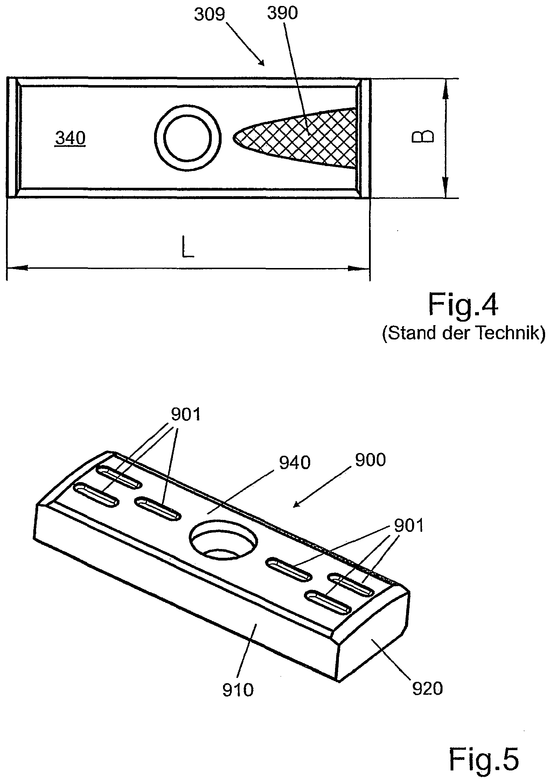

Figur 4 zeigt eine Draufsicht auf die Gleitfläche 340 der in Fig. 3a dargestellten Führungsleiste 300. Schraffiert dargestellt ist die typische Kontaktzone 390 an der Gleitfläche 340 einer Führungsleiste 300, an der beim Bohren mit Tieflochbohrern üblicherweise Verschleiß auftritt. Diese Kontaktzone 390 entspricht dem Teil der Gleitfläche 340 der Führungsleiste 300, der tatsächlich mit der (nicht dargestellten) Bohrungswand in Kontakt steht. In diesem Bereich kommt es durch Reibung zwischen Gleitfläche 340 und Bohrungswand zu Verschleiß, das heißt zu einem Materialabtrag an der Führungsleiste 300. In der Kontaktzone 390 liegt die Führungsleiste 300 direkt an der Bohrungswand an, wodurch nur sehr wenig Kühlschmierstoff zwischen Kontaktzone 390 und Bohrungswand gelangen kann. Mit zunehmendem Verschleiß wird die Fläche der Kontaktzone 390 größer und es können sich in dieser Zone Risse bilden, die durch anhaltende Hitzeeinwirkung verursacht werden.

Üblicherweise tritt Verschleiß nur einseitig an Führungsleisten auf, sodass die Führungsleisten um 180° gewendet und erneut eingesetzt werden können.

Aus dem Stand der Technik bekannte Führungsleisten sind üblicherweise wenigstens in dem Bereich aus einem verschleißbeständigen Material hergestellt, an dem sie in Kontakt mit der Bohrungswand steht. Verbreitete Materialien für diesen Zweck sind zum Beispiel Hartmetall, Keramik oder CBN. Zur weiteren Erhöhung der Lebensdauer kann ferner vorgesehen sein, wenigstens die Gleitfläche(n) einer Führungsleiste mit einer Hartstoffschicht zu beschichten, die sowohl die Entstehung von Verschleiß und die Übertragung von Wärme in die Führungsleiste reduziert als auch die Reibung zwischen Gleitfläche und Bohrungswand vermindert.

Figur 5 zeigt eine isometrische Ansicht einer erfindungsgemäßen Führungsleiste 900 mit gleichem Aufbau wie die in Figur 3a und 4 dargestellte. In der Gleitfläche 940 der Führungsleiste 900 sind mehrere taschenartige Schmiernuten 901 angeordnet, die entlang der Gleitfläche 940 verlaufen und deren Ausdehnung allein auf die Gleitfläche 940 beschränkt ist. Diese Ausführung der Schmiernuten 901 wirkt als Reservoir, in dem sich Kühlschmierstoff sammeln kann, so dass stets eine geringe Menge Kühlschmierstoff vorhanden ist, die zur Schmierung in der Kontaktzone 990 beitragen kann.

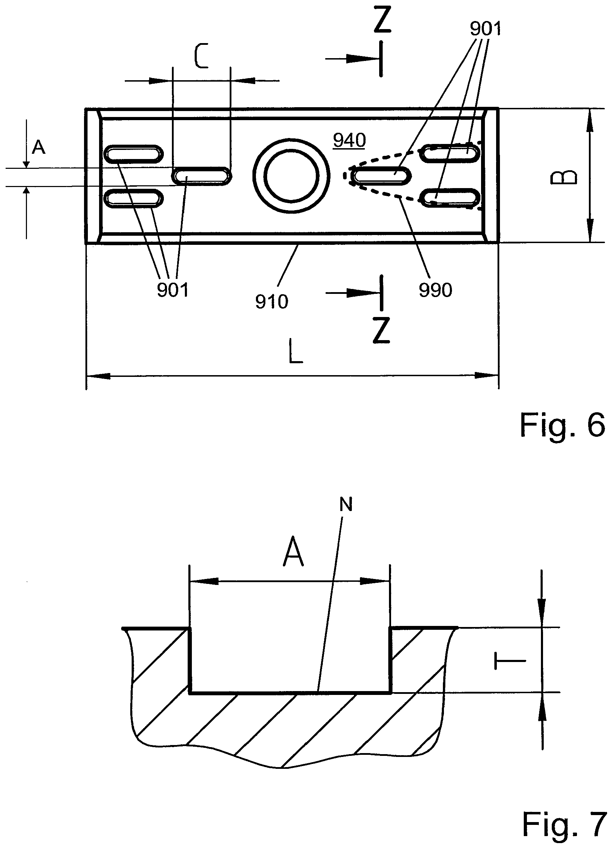

Figur 6 zeigt eine Draufsicht auf die Gleitfläche 940 der in Figur 5 dargestellten Führungsleiste 900. Die Kontaktzone 990 ist als Strichlinie dargestellt. Die Länge einer Schmiernut 901 ist mit C bezeichnet. Prinzipiell kann die Länge einer jeden Schmiernut 901 unterschiedlich zur Länge der anderen Schmiernuten 901 sein. Die Breite einer Schmiernut 901 ist mit A bezeichnet.

Weitere Ausführungsformen von Schmiernuten können beispielsweise einen bogenförmigen oder polygonalen Verlauf in der Draufsicht auf die Führungsleiste aufweisen. Gegenstand der vorliegenden Erfindung ist jedoch nicht die Ausführungsform der Schmiernuten selbst, sondern die Anordnung der Schmiernuten im Bereich der Kontaktzone zwischen Führungsleiste und Bohrungswand. Die Darstellung der in den Figuren 5 und 6 dargestellten Schmiernuten ist aus diesem Grunde nicht einschränkend zu verstehen. Rein prinzipiell können an sich beliebige Ausbildungen und Gestalten der Schmiernuten vorgesehen sein, wobei diese Schmiernuten immer im Bereich der Kontaktzone angeordnet sind und im Vergleich zu den Begrenzungsflächen und zur Höhe oder Dicke der Führungsleisten kleine Ausdehnungen aufweisen.

In den Figuren 7 bis 9 sind verschiedene bevorzugte Ausführungsformen für den Querschnitt der Schmiernuten dargestellt. Die dargestellten Ausführungsformen beziehen sich dabei auf den in Figur 6 mit Z-Z dargestellten Querschnitte.

Figur 7 zeigt einen im wesentlichen rechteckförmigen Querschnitt einer Schmiernut N.

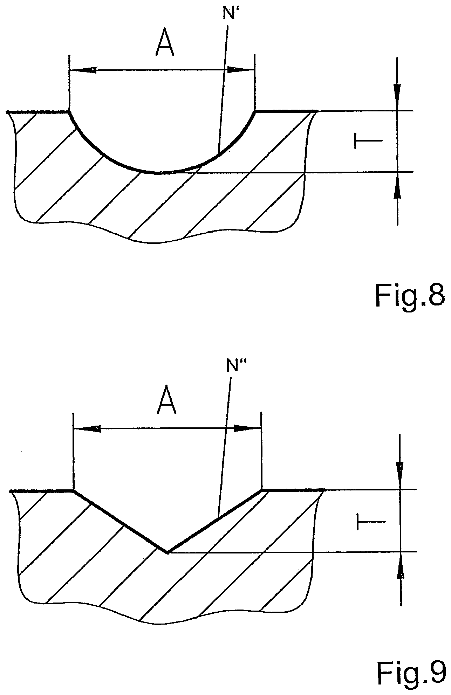

Figur 8 zeigt einen im wesentlichen bogenförmigen Querschnitt einer Schmiernut N'.

Figur 9 zeigt einen im wesentlichen dreiecksförmigen Querschnitt einer Schmiernut N".

In Figur 7 bis Figur 9 ist jeweils die Breite der Schmiernut als A, deren Tiefe als T bezeichnet. Die Tiefe T beträgt vorzugsweise zwischen 0,1 und 1,5 mm.

Die Schmiernuten N, N', N" können entweder durch ein Urformverfahren bei der Herstellung der Führungsleisten hergestellt werden, zum Beispiel durch Pressen und Sintern, oder sie können in einem gesonderten Arbeitsgang in die Gleitfläche eingebracht werden.

Die dargestellten Querschnittsformen sind hier nur beispielhaft dargestellt. Alle weiteren möglichen Querschnittsformen, auch unregelmäßige oder polygonförmige, sind im Prinzip möglich. Die Erfindung erfasst damit auch beliebige Ausgestaltungen der Schmiernuten.

In Versuchen wurde ermittelt, dass eine besonders deutliche Verbesserung der Lebensdauer der Führungsleisten erzielt werden konnte, wenn mehrere Schmiernuten in einem Winkel von sowohl annähernd 90° als auch parallel zur Längsausdehnung der Führungsleiste eingebracht wurden.

Prinzipiell können Verbesserungen auch dadurch erzielt werden, dass Schmiernuten entsprechend Fig. 5 und Fig. 6 vorgesehen werden, deren Ausdehnung in Breite und Länge wenigstens annähernd gleich ist. Die Schmiernuten könnten dementsprechend beispielsweise in der Draufsicht entsprechend Figur 6 als kreisförmige oder quadratische Vertiefung ausgeführt werden, wobei die Querschnittsform vorzugsweise entsprechend Figur 7 bis Figur 9 ausgeführt sein kann.

## Patentansprüche

1. Führungsleiste (900) für ein Tiefbohrwerkzeug mit wenigstens einer Gleitfläche (940), wobei im Bereich einer Kontaktzone (990) der Gleitfläche (940) eine Schmiernut (901) angeordnet ist, **dadurch gekennzeichnet, dass** die Schmiernut (901) als geschlossene Tasche ausgeführt ist.

2. Führungsleiste (900) nach Anspruch 1, **dadurch gekennzeichnet, dass** im Bereich der Kontaktzone (990) der Gleitfläche (940) eine Mehrzahl von als geschlossenen Taschen ausgebildeten Schmiernuten (901) angeordnet ist.

3. Führungsleiste (900) nach Anspruch 1 oder 2, **dadurch gekennzeichnet dass** die Schmiernuten (901) eine Länge (C) aufweisen, die annähernd ihrer Breite (A) entspricht.

4. Führungsleiste (900) nach Anspruch 1 oder 2, **dadurch gekennzeichnet dass** die die Schmiernuten (901) jeweils eine Breite (A) aufweisen, die maximal einem Fünftel der Breite (B) der Führungsleiste (900) entspricht.

5. Führungsleiste (900) nach Anspruch 1 oder 2, **dadurch gekennzeichnet, dass** die Querschnittsform der Schmiernuten (901) eine polygonale und/oder bogenförmige und/oder eine unregelmäßige Gestalt aufweisen.

6. Führungsleiste (900) nach Anspruch 1 oder 2, **dadurch gekennzeichnet dass** die Tiefe der Schmiernuten (901) zwischen 0,1 mm und 1,5 mm beträgt.

7. Führungsleiste (900) nach Anspruch 1 oder 2, **dadurch gekennzeichnet dass** die Führungsleiste (900) wenigstens teilweise aus Hartmetall besteht.

8. Führungsleiste (900) nach Anspruch 1 oder 2, **dadurch gekennzeichnet dass** die Führungsleiste (900) mit einer Hartstoffschicht versehen ist.

## Claims

1. Guide gib (900) for a deep drilling tool having at least one sliding surface (940), wherein a lubricating groove (901) is arranged in the region of a contact zone (990) of the sliding surface (940), **characterised in that** the lubricating groove (901) is implemented as a closed pocket.

2. Guide gib (900) according to claim 1, **characterised in that** a plurality of lubricating grooves (901) formed as closed pockets is arranged in the region of the contact zone (990) of the sliding surface (940).

3. Guide gib (900) according to claim 1 or 2, **characterised in that** the lubricating grooves (901) have a length (C) which roughly corresponds to its width (A).

4. Guide gib (900) according to claim 1 or 2, **characterised in that** the lubricating grooves (901) each have a width (A) which corresponds to a maximum of one fifth of the width (B) of the guide gib (900).

5. Guide gib (900) according to claim 1 or 2, **characterised in that** the cross-sectional shape of the lubricating grooves (901) is polygonal and/or arched and/or is an irregular shape.

6. Guide gib (900) according to claim 1 or 2, **characterised in that** the depth of the lubricating grooves (901) is between 0.1mm and 1.5mm.

7. Guide gib (900) according to claim 1 or 2, **characterised in that** the guide gib (900) consists at least partially of hard metal.

8. Guide gib (900) according to claim 1 or 2, **characterised in that** the guide gib (900) is provided with a hard material layer.

## Revendications

1. Barrette de guidage (900) destinée à un outil de perçage profond comportant au moins une surface de glissement (940), une rainure de lubrification (901) étant située dans le secteur d'une zone de contact (990) de la surface de glissement (940),
**caractérisée en ce que**
la rainure de lubrification (901) est réalisée sous la forme d'une poche fermée.

2. Barrette de guidage (900) conforme à la revendication 1,
**caractérisée en ce qu'**
un ensemble de rainures de lubrification (901) réalisées sous la forme de poches fermées est positionné dans le secteur de la zone de contact (990) de la surface de glissement (940).

3. Barrette de guidage (900) conforme à la revendication 1 ou 2,
**caractérisée en ce que**
les rainures de lubrification (901) ont une longueur (C) qui correspond approximativement à leur largeur (A).

4. Barrette de guidage (900) conforme à la revendication 1 ou 2,
**caractérisée en ce que**
les rainures de lubrification (901) ont chacune une largeur (A) qui correspond au maximum à un cinquième de la largeur (B) de la barrette de guidage (900).

5. Barrette de guidage (900) conforme à la revendication 1 ou 2,
**caractérisée en ce que**
la forme de la section transversale des rainures de lubrification (901) est une forme polygonale et/ou courbe et/ou irrégulière.

6. Barrette de guidage (900) conforme à la revendication 1 ou 2,
**caractérisée en ce que**
la profondeur des rainures de lubrification (901) est comprise entre 0,1 mm et 1,5 mm.

7. Barrette de guidage (900) conforme à la revendication 1 ou 2,
**caractérisée en ce qu'**
elle est au moins partiellement réalisée en métal dur.

8. Barrette de guidage (900) conforme à la revendication 1 ou 2,
**caractérisée en ce qu'**
elle est équipée d'une couche en matériau dur.
